# EUROPÄISCHE PATENTSCHRIFT

(11) **EP 1 566 866 B1**
(45) Veröffentlichungstag und Bekanntmachung des Hinweises auf die Patenterteilung: **22.04.2009**
(21) Anmeldenummer: 05001183.2
(22) Anmeldetag: 21.01.2005
(51) Int. Cl.: H01S 3/08

(54) **Optisch instabiler Resonator und Laservorrichtung**
Optical unstable resonator and laser device
Résonateur optique instable et appareil laser

(30) Priorität: 21.02.2004 DE 102004008640
(43) Veröffentlichungstag der Anmeldung: 24.08.2005
(73) Patentinhaber: Deutsches Zentrum für Luft- und Raumfahrt e.V., 51147 Köln (DE)
(72) Erfinder: Hall, Thomas, 72218 Wildberg (DE)
(74) Vertreter: Hoeger, Stellrecht & Partner Patentanwälte

(56) Entgegenhaltungen:
- DE-A1- 10 230 522
- GB-A- 2 276 031
- US-A- 5 123 028
- US-A- 2003 214 993

## Beschreibung

Die Erfindung betrifft einen Resonator, umfassend ein optisch aktives Medium, einen sphärischen Rückspiegel und einen sphärischen Auskopplungsspiegel, wobei eine konkave Spiegelfläche des Auskopplungsspiegels dem optisch aktiven Medium zugewandt ist und ein Auskopplungsbereich bezogen auf die optische Achse asymmetrisch ausgebildet ist, so daß bezogen auf die optische Achse eine asymmetrische Auskopplung erfolgt.

Die Erfindung betrifft ferner eine Laservorrichtung und insbesondere Gaslaservorrichtung mit einem solchen Resonator.

Optische Resonatoren sind beispielsweise aus der Veröffentlichung "Optische Resonatoren für Hochleistungs-Festkörper-Laser" von N. Hodgson, Festkörper-Laser-Institut Berlin GmbH, interner Bericht, Dezember 1990 oder dem Artikel "Analysis of stable-unstable free electron laser resonators" von C.-C. Shih, SPIE Vol. 1868, Seiten 278 bis 285 bekannt. Auch der Artikel "Improvement of slab-laser beam divergence by using an off-axis unstable-stable resonator" von K. Kuba et al. (Optics Letters Vol. 15, 1990, Seiten 121 bis 123) offenbart Resonatoren. Es werden dabei insbesondere Zylinderspiegel eingesetzt.

Aus der GB 2 276 031 A ist ein Festkörperlaser bekannt, welcher ein stabförmiges Lasermedium umfaßt. Über Sphärische Spiegel ist ein instabiler Resonator gebildet, wobei ein Auskopplungsbereich bezogen auf die optische Achse asymmetrisch ausgebildet ist.

Aus der US 5,123,028 ist ein Stablaser bekannt, welcher ein Paar von beabstandeten Elektroden umfasst, welche lichtreflektierende Oberflächen aufweisen. Ein Lasergas ist zwischen diesen Elektroden angeordnet. Über ein Paar von sphärischen Spiegeln ist eine Resonanzkavität gebildet, wobei die Spiegel so angeordnet und ausgebildet sind, daß ein stabiler Wellenleiter längs einer ersten Achse gebildet ist und ein instabiler Resonator längs einer zweiten Achse senkrecht zur ersten Achse gebildet ist.

Die Erfindung ist in den unabhängigen Ansprüchen definiert. Vorteilhafte Weiterbildungen der Erfindung sind in den abhängigen Ansprüchen angegeben.

Der Erfindung liegt die Aufgabe zugrunde, einen Resonator bereitzustellen, welcher für optisch aktive Medien mit kleiner Verstärkung und großem Querschnitt verwendbar ist.

Diese Aufgabe wird erfindungsgemäß dadurch gelöst, daß dem Auskopplungsspiegel ein erster Spiegelbereich zugeordnet ist, welcher auf einer Seite einer die optische Achse umfassenden Ebene liegt, und ein zweiter Spiegelbereich zugeordnet ist, welcher auf der anderen Seite dieser Ebene liegt, wobei die beiden Spiegelbereiche unterschiedlich ausgebildet sind und der zweite Spiegelbereich kleinere laterale Abmessungen aufweist als der erste Spiegelbereich und daß der Auskopplungsbereich den zweiten Spiegelbereich umgibt.

Durch die Verwendung sphärischer Spiegel wird ein rein instabiler Resonator bereitgestellt. Es wird dadurch vermieden, daß sich, wie bei Zylinderspiegeln, in einer stabilen Richtung ein hoher Multimode ausbilden kann. Dadurch wiederum ergibt sich ein zeitunabhängiger Mode, wobei auch im Fernfeld eine nicht zu stark strukturierte Intensitätsverteilung geliefert wird.

Der erfindungsgemäße Resonator mit den sphärischen Spiegeln läßt sich im Vergleich zu Zylinderspiegeln wesentlich einfacher justieren und er ist auch gegenüber Spiegelradienabweichungen und Verkippungen weitaus unempfindlicher.

Der erfindungsgemäße Resonator läßt sich für Medien mit einem großen Querschnitt einsetzen; insbesondere gibt es keine Einschränkungen bezüglich der lateralen Abmessungen, wie es beispielsweise bei Zylinderspiegeln der Fall ist.

Sphärische Spiegel sind in der Herstellung preiswerter und sind einfacher zu beziehen, so daß die Herstellungskosten des erfindungsgemäßen Resonators reduziert sind.

Zylinderspiegel sind bezüglich eines rechteckigen Mediumquerschnitts optimiert. Der erfindungsgemäße Resonator läßt sich bei beliebigen Mediumquerschnitten verwenden. Insbesondere über Verwendung eines Scrapers läßt sich eine Anpassung an beliebige Medienquerschnitte durchführen.

Durch die asymmetrische Auskopplung wird eine kompaktere Auskopplungsfläche (mit kleinerer Divergenz) bereitgestellt, die für ein Fernfeld mit verringerter Struktur sorgt.

Insbesondere wird erfindungsgemäß ein asymmetrischer konfokaler instabiler Negativ-Branch-Resonator bereitgestellt.

Ein Auskopplungsbereich ist bezogen auf die optische Achse asymmetrisch ausgebildet ist. Dadurch wird für den Auskopplungsbereich eine kompakte Fläche bereitgestellt, was darin resultiert, daß man eine vorteilhafte Modenverteilung mit einer zeitunabhängigen Mode und einem Fernfeld erhält, welches im Vergleich zu bekannten instabilen Resonatoren bei kleiner Auskopplung eine weniger stark strukturierte Intensitätsverteilung aufweist.

Günstigerweise ist eine konkave Spiegelfläche des Rückspiegels dem optisch aktiven Medium zugewandt. Ferner ist eine konkave Spiegelfläche des Auskopplungsspiegels dem optisch aktiven Medium zugewandt. Dadurch ist ein konfokaler Resonator bereitgestellt. Dieser Resonator wiederum ist in allen Richtungen instabil. Ein solcher Resonator ist weniger justierempfindlich und auch unempfindlicher gegenüber Spiegelradienabweichungen und Verkippungen wie beispielsweise ein Resonator mit Zylinderspiegeln.

Günstigerweise liegen die Brennpunkte des Rückspiegels und des Auskopplungsspiegels zwischen diesen beiden Spiegeln.

Es ist vorgesehen, daß ein Kugelmittelpunkt (einer gedachten Kugel) für den Rückspiegel auf der optischen Achse liegt.

Günstigerweise liegt der Brennpunkt des Rückspiegels auf der optischen Achse zwischen dem Rückspiegel und dem Auskopplungsspiegel.

Es ist ferner günstig, wenn ein Kugelmittelpunkt (einer gedachten Kugel) für den Auskopplungsspiegel auf der optischen Achse liegt.

Aus dem oben erwähnten gleichen Grund ist es günstig, wenn der Brennpunkt des Auskopplungsspiegels auf der optischen Achse zwischen dem Rückspiegel und dem Auskopplungsspiegel liegt.

Ganz besonders günstig ist es, wenn die Brennpunkte von Auskopplungsspiegel und Rückspiegel zusammenfallen. Es ist dann ein Negativ-Branch-Resonator bereitgestellt. Dadurch läßt sich eine optimierte Strahlungsführung in dem Resonator erreichen, wobei insbesondere in einem Auskopplungsbereich Strahlung parallel zur optischen Achse auskoppelbar ist.

Eine optimale Auskopplung läßt sich erreichen, wenn der gemeinsame Brennpunkt näher am Auskopplungsspiegel als am Rückspiegel liegt. Dadurch läßt sich Strahlung, welche von einem bestimmten Bereich des Auskopplungsspiegels ausgeht und am Rückspiegel reflektiert wird, "auffächern", das heißt der Rückreflexionsbereich am Rückspiegel ist größer als der Ausgangsbereich am Auskopplungsspiegel. Dadurch wiederum läßt sich auf einfache Weise Strahlung auskoppeln, wobei die Auskopplung über ein kompaktes Gebiet (mit "maximaler" Zusammenhängung) erfolgen kann und damit wiederum eine homogenere Intensitätsverteilung im Fernfeld ermöglicht wird.

Es ist günstig, wenn der Radius des Rückspiegels sich vom Radius des Auskopplungsspiegels unterscheidet. Dadurch wiederum läßt sich eine optimierte Auskopplung erhalten.

Ganz besonders vorteilhaft ist es, wenn der Radius des Rückspiegels größer ist als der Radius des Auskopplungsspiegels. Das optimale Radienverhältnis hängt unter anderem von dem optisch aktiven Medium ab. In einer beispielhaften Ausführungsform wurde ein Verhältnis der Radien zwischen 1,1 und 1,2 gewählt. Dieses Verhältnis kann aber auch kleiner oder größer sein.

Um eine optimierte Lasertätigkeit zu erhalten, sind vorteilhafterweise die lateralen Abmessungen des Rückspiegels größer als die entsprechenden lateralen Abmessungen des optisch aktiven Mediums und/oder eines Behältnisses für das optisch aktive Medium. Die lateralen Abmessungen sind die Abmessungen in den Richtungen quer zur optischen Achse. Es wird dann sichergestellt, daß Strahlung innerhalb des Resonators das optische Medium durchläuft. Bei einem optisch aktiven Medium als Gas definiert das Behältnis, in dem das Gas aufgenommen ist bzw. welches das Gas durchströmt, die lateralen Abmessungen des Rückspiegels.

Aus dem gleichen Grund ist es vorteilhaft, wenn die lateralen Abmessungen des Auskopplungsspiegels außerhalb eines Auskopplungsbereiches größer sind als die entsprechenden lateralen Abmessungen des optisch aktiven Mediums und/oder des Behältnisses für das optisch aktive Medium. Über den Auskopplungsbereich wird Strahlung ausgekoppelt, so daß hier keine Rückreflexion stattfinden darf.

Die asymmetrische Auskopplung kann dadurch erfolgen, daß der Auskopplungsspiegel entsprechend geformt ist und/oder der Strahlengang innerhalb des Resonators entsprechend beeinflußt wird. Ein effektiver Spiegelbereich des Auskopplungsspiegels ist bezogen auf die optische Achse asymmetrisch, wobei dieser effektiver Spiegelbereich eben durch Formung des Spiegels hergestellt ist oder durch Beeinflussung des Strahlengangs erreicht ist.

Insbesondere ist dem Auskopplungsspiegel ein Auskopplungsbereich zugeordnet. Über diesen Auskopplungsbereich wird Strahlung aus dem Resonator ausgekoppelt.

Der Auskopplungsbereich ist vorteilhafterweise zur optischen Achse beabstandet. Dadurch läßt sich eine optimierte Auskopplung erreichen, wobei dann auch der erfindungsgemäße Resonator im Zusammenhang mit optisch aktiven Medien mit großen Durchmesser und/oder kleiner Verstärkung einsetzbar ist.

Es ist vorgesehen, daß der Auskopplungsbereich entsprechend der auszukoppelnden Leistung ausgebildet ist. Insbesondere ist die geometrische Form des Auskopplungsbereichs und/oder die Anordnung des Auskopplungsbereichs derart, daß die gewünschte Leistung ausgekoppelt wird.

Es kann vorgesehen sein, daß der Auskopplungsspiegel selber so ausgebildet ist, daß eine asymmetrische Auskopplung erfolgt. Beispielsweise ist in einem sphärischen Spiegel ein Halbringbereich ausgeschnitten, wobei dieser ausgeschnittene Halbringbereich dann den Auskopplungsbereich definiert.

Es kann auch alternativ oder zusätzlich vorgesehen sein, daß ein Scraper zwischen Rückspiegel und Auskopplungsspiegel angeordnet ist. Der Scraper definiert in seiner Anordnung und Ausbildung den Strahlungsanteil, welcher zum Auskopplungsspiegel gelangt und welcher an dem Scraper nach außen reflektiert wird, das heißt ausgekoppelt wird. Ein Scraper ist ein Spiegel, welcher eine Öffnung aufweist, durch die Strahlung hindurchgehen kann, und eine Spiegelfläche aufweist, welche insbesondere an oder um die Öffnung angeordnet ist, und über die Strahlung auskoppelbar ist. Die Kombination zwischen Auskopplungsspiegel und Scraper definiert dann den Auskopplungsbereich.

Insbesondere ist der Scraper so angeordnet und ausgebildet, daß eine asymmetrische Auskopplung erfolgt. Beispielsweise ist der Scraper nur einseitig bezüglich einer Ebene, welche die optische Achse enthält, angeordnet.

Insbesondere definiert eine Spiegelfläche des Scrapers einen Auskopplungsbereich.

Eine Spiegelfläche des Scrapers ist vorteilhafterweise an das optische Medium und/oder ein Behältnis für das optische Medium angepaßt ausgebildet. Dadurch läßt sich Strahlung definiert auskoppeln und insbesondere mit einer definierten Leistung auskoppeln.

Es kann vorgesehen sein, daß der Scraper im wesentlichen in einem 45°-Winkel zur optischen Achse angeordnet ist. Dadurch läßt sich Strahlung in einem rechten Winkel zur optischen Achse aus dem Resonator auskoppeln.

Zur asymmetrischen Auskopplung ist dem Auskopplungsspiegel ein erster Spiegelbereich zugeordnet, welcher auf der einen Seite einer die optische Achse umfassenden Ebene liegt, und ein zweiter Spiegelbereich zugeordnet, welcher auf der anderen Seite dieser Ebene liegt, wobei die beiden Spiegelbereiche unterschiedlich ausgebildet sind. Dadurch wird eine Asymmetrie bereitgestellt, welche eben für die asymmetrische Auskopplung sorgt. Die beiden Spiegelbereiche können dabei direkt an dem Spiegel gebildet sein oder es kann sich um effektive Spiegelbereiche handeln, welche mittels Strahlbeeinflussung wie beispielsweise durch einen Scraper eingestellt werden.

Insbesondere weist der erste Spiegelbereich eine größere Spiegelfläche auf als der zweite Spiegelbereich, um so eine asymmetrische Auskopplung zu erhalten.

Es ist vorgesehen, daß ein Auskopplungsbereich den zweiten Spiegelbereich umgibt.

Es kann ferner vorgesehen sein, daß der erste Spiegelbereich und der zweite Spiegelbereich in der Ebene, welche die optische Achse umfaßt, verbunden sind.

Der zweite Spiegelbereich weist kleinere laterale Abmessungen auf als der erste Spiegelbereich. Dadurch wird eine Asymmetrie bereitgestellt, welche wiederum eine asymmetrische Auskopplung mit den entsprechenden Vorteilen erlaubt.

Um eine asymmetrische Auskopplung bezogen auf eine Achse quer und insbesondere senkrecht zur optischen Achse zu erhalten, ist vorteilhafterweise der zweite Spiegelbereich achssymmetrisch zu einer solchen Achse ausgebildet. Auch der erste Spiegelbereich ist vorteilhafterweise achssymmetrisch zu einer solchen Achse ausgebildet. Zu einer Achse, welche quer zu dieser Achse und quer zur optischen Achse liegt, ist der zweite Spiegelbereich asymmetrisch ausgebildet.

Bei einer Ausführungsform ist der erste Spiegelbereich bezogen auf seinen Außenumfang halbkreisförmig ausgebildet. Ein solcher Spiegelbereich läßt sich auf einfache Weise herstellen.

Es kann auch vorgesehen sein, daß der zweite Spiegelbereich bezogen auf seinen Außenumfang halbkreisförmig ist. Es sind jedoch auch andere geometrische Formen möglich. Die Formung des zweiten Spiegelbereichs muß nicht unbedingt mechanisch erfolgen. Wenn es sich bei dem zweiten Spiegelbereich um einen effektiven Spiegelbereich handelt, welcher durch Bestrahlung definiert ist, dann definiert eine Öffnung in einem Scraper eben die Form des zweiten Spiegelbereichs. Über einen Scraper ist eine Anpassung an den Querschnitt des optisch aktiven Mediums möglich.

Es ist vorgesehen, daß eine Projektion des optisch aktiven Mediums parallel zur optischen Achse auf den Rückspiegel innerhalb eines beleuchteten Bereichs des Rückspiegels liegt. Bei der Projektion des optisch aktiven Mediums kann es sich um eine Projektion des Mediums selber, um die Projektion eines Behältnisses für das optisch aktive Medium oder um die Projektion eines Strömungsraums für das optisch aktive Medium auf den Rückspiegel handeln. Es ist dann sichergestellt, daß Strahlung vom Rückspiegel (welche parallel zur optischen Achse verläuft) durch das optisch aktive Medium geht.

Der erfindungsgemäße Resonator läßt sich vorteilhaft verwenden in einem Laser.

Es ist günstig, wenn eine Laservorrichtung und insbesondere Gaslaservorrichtung einen erfindungsgemäßen Resonator aufweist.

Es kann dabei vorgesehen sein, daß zwischen dem Rückspiegel und dem Auskopplungsspiegel ein Strömungsraum angeordnet ist, welches von Gas durchströmbar ist. Es läßt sich dadurch eine hohe Laserleistung erzielen.

Die nachfolgende Beschreibung bevorzugter Ausführungsformen dient im Zusammenhang mit der Zeichnung der näheren Erläuterung der Erfindung. Es zeigen:
- Figur 1: eine schematische perspektivische Darstellung eines ersten Ausführungsbeispiels eines erfindungsgemäßen Resonators;
- Figur 2: eine Schnittdarstellung des Resonators gemäß Figur 1 in einer Ebene, welche die optische Achse und die Achsen y₁, y₂ enthält;
- Figur 3: ein zweites Ausführungsbeispiel eines erfindungsgemäßen Resonators;
- Figur 4: eine Schnittansicht des Resonators gemäß Figur 3 in einer Ebene, welche die optische Achse und die Achsen y₁, y₂ enthält;
- Figur 5: eine berechnete Intensitätsverteilung im Fernfeld für eine Laservorrichtung mit dem Resonator gemäß Figur 1 oder Figur 3;
- Figur 6: eine berechnete Intensitätsverteilung im Nahfeld für eine Laservorrichtung mit einem Resonator gemäß den Figuren 1 oder 3;
- Figur 7: ein erstes Ausführungsbeispiel einer Gaslaservorrichtung in schematischer Darstellung und
- Figur 8: ein zweites Ausführungsbeispiel einer Gaslaservorrichtung in schematischer Darstellung.

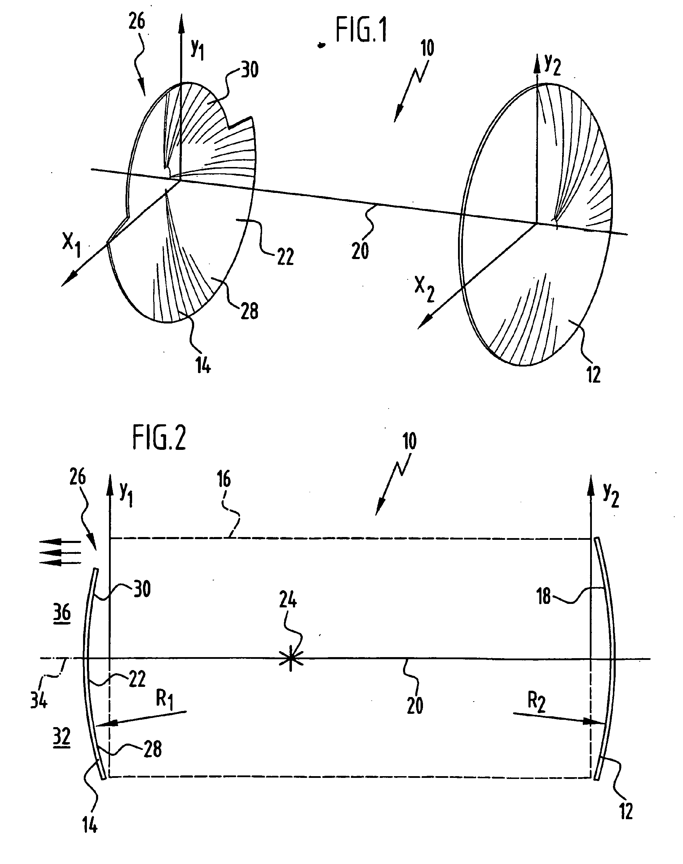

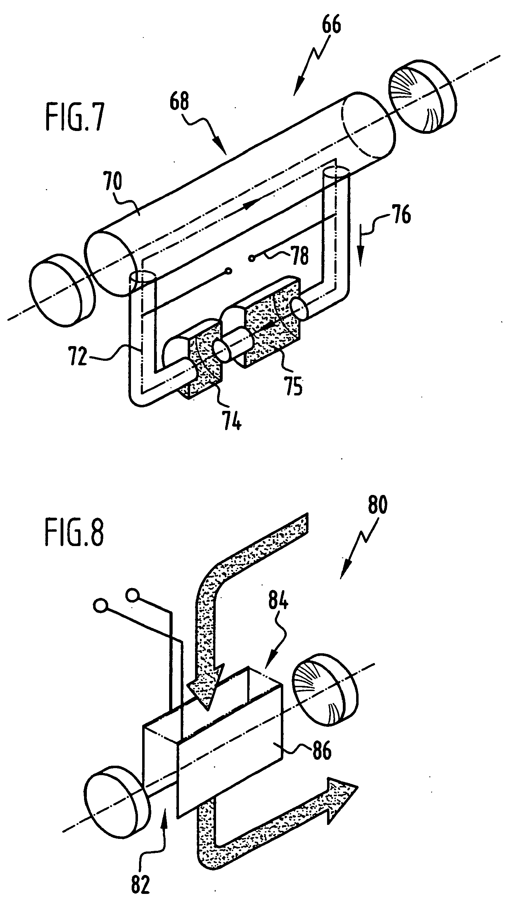

Ein erstes Ausführungsbeispiel eines erfindungsgemäßen optisch instabilen Resonators, welches in den Figuren 1 und 2 gezeigt und dort als Ganzes mit 10 bezeichnet ist, umfaßt einen Rückspiegel 12 und einen Auskopplungsspiegel 14. Die beiden Spiegel 12 und 14 sind beabstandet, wobei zwischen diesen Spiegeln das optisch aktive Medium 16 angeordnet oder geführt ist, insbesondere im Falle eines Gaslasers ist ein Behältnis, welches das optisch aktive Medium aufnimmt, oder ein Strömungsraum, welchen das optisch aktive Medium durchströmt, zwischen den Spiegel 12, 14 angeordnet. In der Figur 7 ist ein solches Behältnis gezeigt und dort mit dem Bezugszeichen 70 bezeichnet. In der Figur 8 ist ein Strömungsraum 84 gezeigt.

Der Rückspiegel 12 ist sphärisch ausgebildet mit einer konkaven Fläche 18, welche dem optisch aktiven Medium 16 zugewandt ist. Diese konkave Fläche 18 weist einen bestimmten Radius R₂ auf; die konkave Fläche 18 liegt auf der Oberfläche einer (gedachten) Kugel, wobei der Radius gegenüber dem Kugelmittelpunkt gemessen ist. Der (gedachte) Kugelmittelpunkt liegt auf einer optischen Achse 20.

Der Auskopplungsspiegel 14 ist ebenfalls sphärisch ausgebildet mit einer sphärischen konkaven Fläche 22, welche dem optisch aktiven Medium 16 zugewandt ist. Die beiden konkaven Flächen 18 und 22 sind damit einander zugewandt. Die konkave Fläche 22 liegt auf der Oberfläche einer gedachten Kugel, wobei der Mittelpunkt dieser gedachten Kugel auf der optischen Achse 20 liegt. Diese gedachte Kugel hat einen Radius R₁, welcher dem Radius der konkaven Fläche 22 entspricht.

Der Radius R₂ des Rückspiegels 12 für seine konkave Fläche 18 ist größer als der Radius R₁ des Auskopplungsspiegels 14 für dessen konkave Fläche 22.

Bei einer beispielhaften Ausführungsform liegt das Verhältnis des Radius des Rückspiegels 12 zu dem Radius des Auskopplungsspiegels 14 (R₂/R₁) zwischen 1,1 und 1,2. Es sind jedoch auch kleinere Verhältnisse (größer 1) oder größere Verhältnisse möglich.

Der Rückspiegel 12 weist einen Brennpunkt 24 auf, welcher auf der optischen Achse 20 liegt. Der Auskopplungsspiegel 14 weist ebenfalls einen Brennpunkt auf, welcher auf der optischen Achse liegt. Die beiden Spiegel 12 und 14 sind so angeordnet und ausgebildet, daß deren Brennpunkte im wesentlichen zusammenfallen. Der Brennpunkt, welcher in Figur 2 mit dem Bezugszeichen 24 bezeichnet ist, ist dann der Brennpunkt sowohl des Rückspiegels 12 als auch des Auskopplungsspiegels 14.

Der (zusammenfallende) Brennpunkt 24 der beiden Spiegel 12, 14 liegt vorzugsweise näher an dem Auskopplungsspiegel 14 als an dem Rückspiegel 12.

Der Rückspiegel 12 weist größere laterale Abmessungen auf (quer zur optischen Achse 20), daß er das optisch aktive Medium 16 bzw. das Behältnis für das optisch aktive Medium überdeckt. Es kann vorgesehen sein, daß die lateralen Abmessungen des Rückspiegels 12 größer sind, um beispielsweise Beugungsverluste berücksichtigen zu können.

Eine Projektion des optisch aktiven Mediums in einer Richtung parallel zur optischen Achse 20 auf den Rückspiegel 12 liegt innerhalb eines beleuchteten Bereichs des Rückspiegels 12. Der beleuchtete Bereich ist durch den Abstand zwischen dem Rückspiegel 12 und dem Auskopplungsspiegel 14 sowie den Radien dieser beiden Spiegel 12, 14 und die Ausbildung des Auskopplungsspiegels 14 (bzw. eines Scrapers, wie unten noch näher beschrieben) definiert. Bei vorgegebenem optischen Medium bzw. Behältnis für das optische Medium oder Strömungsraum für das optische Medium sind dann entsprechend die Spiegel 12, 14 so auszubilden, daß das optische Medium nicht über den beleuchteten Bereich des Rückspiegels 12 hinausragt und somit nicht in einem hinausragenden Bereich beleuchtet wird.

Da die von dem Rückspiegel 12 ausgehende Strahlung parallel zur optischen Achse 20 ausgerichtet ist, muß die Projektion des optisch aktiven Mediums parallel zur optischen Achse 20 innerhalb des beleuchteten Bereichs liegen.

Der Auskopplungsspiegel 14 weist bis auf einen unten noch näher beschriebenen Auskopplungsbereich ebenfalls solche laterale Abmessungen auf, daß das optisch aktive Medium 16 quer zur optischen Achse 20 überdeckt wird.

Der Resonator 10 ist ein konfokaler optischer Resonator mit Negativ-Branch, das heißt der Brennpunkt 24 liegt zwischen den Spiegeln 12 und 14. Weiterhin ist der Resonator 10 bezogen auf die optische Achse 20 asymmetrisch, das heißt es erfolgt eine asymmetrische optische Auskopplung. Eine solche asymmetrische Auskopplung wird durch eine Asymmetrie im Strahlengang zwischen den beiden Spiegeln 12 und 14 verursacht.

Bei dem Ausführungsbeispiel gemäß den Figuren 1 und 2 ist dem Auskopplungsspiegel 14 ein Auskopplungsbereich 26 zugeordnet, welcher durch eine entsprechende Ausbildung des Auskopplungsspiegels 14 bewirkt ist. Dazu weist der Auskopplungsspiegel 14 einen ersten Spiegelbereich 28 und einen zweiten Spiegelbereich 30 auf. Die beiden Spiegelbereiche 28, 30 sind einstückig miteinander verbunden und umfassen die konkave Fläche 22. Der erste Spiegelbereich 28 liegt auf der einen Seite 32 einer Ebene 34, welche die optische Achse 20 enthält und die Achsen x₁, x₂ enthält. Der zweite Spiegelbereich 30 liegt auf der anderen Seite 36 dieser Ebene 34. In der Ebene 34 sind die beiden Spiegelbereiche 28, 30 miteinander verbunden.

Der zweite Spiegelbereich 30 weist eine kleinere Fläche auf als der erste Spiegelbereich 28. Der zweite Spiegelbereich 30 ist damit unterschiedlich zu dem ersten Spiegelbereich 28 ausgebildet. Er ist bezogen auf die x₁-Achse gegenüber dem zweiten Spiegelbereich 30 zurückgesetzt und ebenfalls bezogen auf die y₁-Achse zurückgesetzt. Damit ist die Höhe des zweiten Spiegelbereichs 30 in Richtung y₁ kleiner als die Höhe des ersten Spiegelbereichs 28 in der gleichen Richtung.

Bei dem gezeigten beispielhaften Ausführungsbeispiel ist der erste Spiegelbereich 28 bezüglich seinen Außenkonturen halbkreisförmig ausgestaltet. Der zweite Spiegelbereich 30 ist ebenfalls halbkreisförmig ausgestaltet, jedoch mit einem kleineren Radius als der erste Spiegelbereich 28. (Bei dem Radius ist ein Kreisradius gemeint und nicht der Kugelradius R₁ der gedachten Kugel für die konkave Fläche 18.) Die Außenabmessungen des ersten Spiegelbereichs 28 entsprechen den Außenabmessungen eines gegenüberliegenden Bereichs des Rückspiegels 12. Der dem zweiten Spiegelbereich 30 gegenüberliegende Bereich des Rückspiegels 12 ist dagegen größer als der zweite Spiegelbereich 30. Es sind auch andere Gestaltungen für den Spiegelbereich möglich. Beispielsweise kann der zweite Spiegelbereich in den Halbraum 32 hineinreichen.

Der Auskopplungsbereich 26 umgibt bei dem gezeigten Ausführungsbeispiel halbringförmig den zweiten Spiegelbereich 30.

Bei dem konfokalen instabilen Negativ-Branch-Resonator 10 trifft Strahlung, welche von einem Bereich ausgeht, welcher den zweiten Spiegelbereich 30 und dessen kreisförmige Fortsetzung in den ersten Spiegelbereich 28 umfaßt, nach Durchgang des Brennpunkts 24 auf den Rückspiegel 12. Die dort in einem entsprechenden Bereich reflektierte Strahlung verläuft parallel zur optischen Achse 20 zum Auskopplungsspiegel 14. Der Reflexionsbereich an dem Rückspiegel 12 ist größer als der "Ausgangsbereich" des Auskopplungsspiegels 14, da der Rückspiegel 12 einen größeren Radius R₂ aufweist und der Brennpunkt 24 näher an dem Auskopplungsspiegel 14 liegt. Die dann von dem Rückspiegel 12 reflektierte Strahlung trifft wiederum auf den Auskopplungsspiegel 14 in einem Bereich, welcher größer ist als der zweite Spiegelbereich 30. Dieser Bereich umfaßt insbesondere eine Halbringfläche am ersten Spiegelbereich 28 auf der Seite 32 der Ebene 34. (Der Durchmesser dieses Ringbereichs entspricht dem Durchmesser des Rückreflexionsbereichs im Rückspiegel 12.) Die auf der Seite 36 ankommende Strahlung, welche nicht den zweiten Spiegelbereich 30 trifft, das heißt im Auskopplungsbereich 26 liegt, verläßt den Resonator 10.

Die auf den Auskopplungsspiegel 14 auftreffende Strahlung wird reflektiert und erreicht wiederum nach Durchgang des Brennpunkts 24 den Rückspiegel 12. Diese trifft in den vorher erwähnten Rückreflexionsbereich, wenn die Strahlung von dem zweiten Spiegelbereich 30 stammt. Die Strahlung, welche von dem erwähnten Halbringbereich stammt, trifft auf einen diesem Rückreflexionsbereich benachbarten Bereich des Rückspiegels 12, welcher auf der Seite 36 der optischen Achse liegt. Der unterhalb der optischen Achse 20 liegende Bereich (das heißt der Bereich, welcher auf der Seite 32 liegt), der außerhalb des Rückreflexionsbereichs liegt, wird nicht mehr beleuchtet.

Die dann wiederum von dem Rückspiegel 12 reflektierte Strahlung trifft auf den Auskopplungsspiegel 14, wobei ein Teil der am Rückspiegel 12 reflektierten Strahlung den Auskopplungsbereich 26 trifft und den Resonator 10 verläßt.

Bei der gezeigten Ausbildung des Auskopplungsspiegels 14 verläßt Strahlung den Resonator 10 in einem halbkreisförmigen Bereich (wenn von Beugung abgesehen wird).

Durch entsprechende Einstellung des Auskopplungsbereichs, das heißt durch entsprechende Einstellung des Spiegelbereichs 30 läßt sich die ausgekoppelte Leistung einstellen.

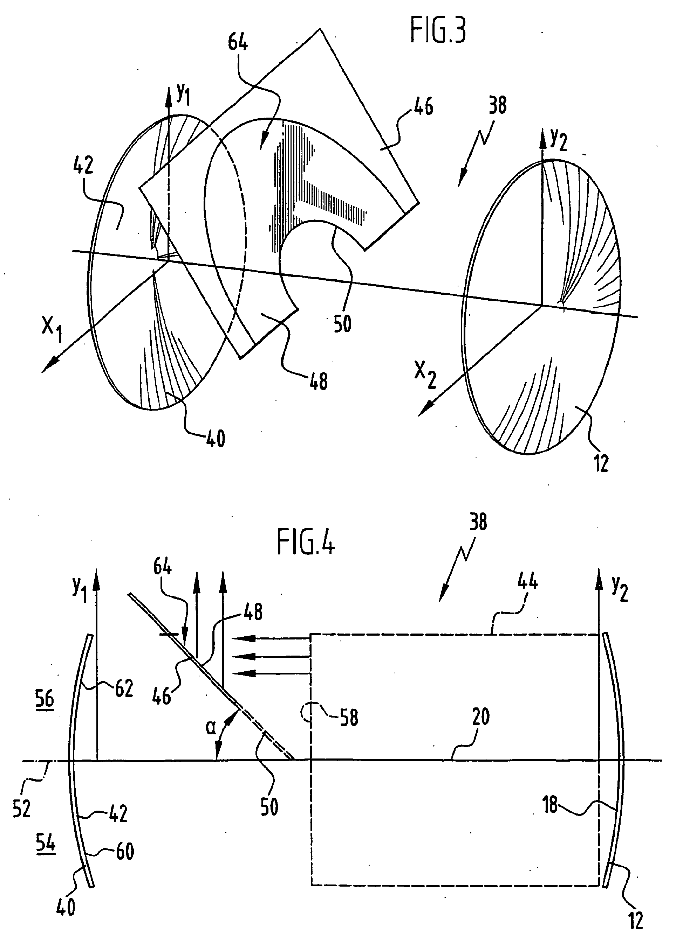

Bei einem zweiten Ausführungsbeispiel eines erfindungsgemäßen konfokalen instabilen Negativ-Branch-Resonator, welcher schematisch in den Figuren 3 und 4 gezeigt und dort als Ganzes mit 38 bezeichnet ist, ist der Rückspiegel grundsätzlich gleich ausgebildet wie oben beschrieben. Es werden deshalb gleiche Bezugszeichen verwendet. Der Rückspiegel 12 ist wiederum symmetrisch bezüglich der optischen Achse 20 angeordnet. Es ist ein Auskopplungsspiegel 40 vorgesehen, welcher wiederum eine sphärisch konkave Fläche 42 einem optischen Medium 44 bzw. einem Behältnis oder Strömungsraum für ein optisches Medium zugewandt aufweist. Der Auskopplungsspiegel 40 ist symmetrisch ausgebildet mit einem Radius (bezogen auf eine gedachte Kugel, von welcher die Fläche 42 einen Oberflächenbereich darstellt) der kleiner ist als der Radius einer entsprechend gedachten Kugel für den Rückspiegel 12. Der Brennpunkt der beiden konfokalen Spiegel 12 und 40 fällt zusammen (negative branch), wobei dieser Brennpunkt vorzugsweise näher an dem Auskopplungsspiegel 40 liegt.

Zur asymmetrischen Auskopplung von Strahlung ist zwischen den beiden Spiegeln 12 und 40 ein Scraper 46 angeordnet. Bei diesem Scraper handelt es sich um ein Element mit einer Spiegelfläche 48, an welcher Strahlung zur Auskopplung aus dem Resonator 38 reflektierbar ist. Ferner weist der Scraper 46 eine für Strahlung durchlässige Öffnung 50 auf, durch die von dem Rückspiegel 12 reflektierte Strahlung auf den Auskopplungsspiegel 40 gelangen kann. Die Öffnung 50 ist dabei kleiner als die Spiegelfläche des Auskopplungsspiegels 40.

Die optische Achse 20 definiert eine Ebene 52 mit einer Seite 54 und einer gegenüberliegenden Seite 56. Die Ebene 52 trennt die beiden Seiten 54, 56. (Die Seiten 54 und 56 sind also jeweils Halbräume.)

Der Scraper 46 sitzt beispielsweise auf einer Seite, beispielsweise auf der Seite 56. Er beeinflußt den Strahlengang auf der Seite 54 nicht. Es ist auch möglich, daß der Scraper über die Ebene, welche die optische Achse 20 enthält, hinausreicht. Die Öffnung des Scrapers ist dann entsprechend ausgebildet.

Die Spiegelfläche 48 des Scrapers 46 ist dabei auch so angeordnet und ausgebildet, daß sie in ihren Querabmessungen (in der x₁-y₁-Ebene) mindestens so groß ist wie das optisch aktive Medium 44 bzw. dessen Behältnis in dem dem Scraper 46 zugewandten Bereich 58 des optisch aktiven Mediums 44 bzw. dessen Behältnisses, abgesehen von der Öffnung 50.

Beispielsweise ist der Scraper 46 in einem Winkel von 45° bezüglich der optischen Achse 20 angeordnet. Es läßt sich dadurch erreichen, daß Strahlung parallel zur optischen Achse 20 rechtwinklig bezogen auf die optische Achse 20 aus dem Resonator 38 auskoppelbar ist.

Durch den Scraper 46 mit seiner Öffnung ist dem Auskopplungsspiegel 40 ein erster Spiegelbereich 60 und ein zweiter Spiegelbereich 62 zugeordnet, wobei die Öffnung 50 den zweiten Spiegelbereich 62 definiert. Der erste Spiegelbereich 60 entspricht dem ersten Spiegelbereich 28 bei dem Resonator 10. Der zweite Spiegelbereich 62 entspricht dem zweiten Spiegelbereich 30 bei dem Resonator 10. Der zweite Spiegelbereich 62 ist bei dem Resonator 38 nicht durch eine Ausbildung und insbesondere Formung des Auskopplungsspiegels erreicht, sondern durch die Anordnung und Formung des Scrapers 46.

Ein Auskopplungsbereich 64 für Strahlung aus dem Resonator 38 ist durch die Ausbildung und Anordnung der Spiegelfläche 48 des Scrapers 46 definiert.

Bei dem Resonator 38 handelt es sich um einen asymmetrischen optisch instabilen konfokalen Negativ-Branch-Resonator.

Die Öffnung 50 kann an das optisch aktive Medium 44 bzw. ein Behältnis angepaßt werden. Beispielsweise wird bei einem runden Laserstab eine runde Öffnung gewählt, während bei einem rechteckigen Behältnis bzw. rechteckigen Laserstab eine rechteckige Öffnung 50 gewählt wird. Durch entsprechende Auswahl eines Scrapers 46 mit Öffnung 50 und Spiegelfläche 48 kann dann bei festen Spiegeln 12, 40 eine gewünschte Auskopplung insbesondere bezüglich des gewünschten Auskopplungsbereichs eingestellt werden. Ferner ist eine Anpassung an das optisch aktive Medium 44 auf einfache Weise möglich.

Bei den gezeigten bevorzugten Ausführungsbeispielen sind die Spiegel 12, 14 und 40 bezüglich ihren äußeren Abmessungen kreisförmig bzw. halbkreisförmig ausgebildet. Es sind auch andere Formgebungen möglich.

Erfindungsgemäß ist ein optisch instabiler Resonator mit sphärischen Spiegeln 12, 14 bzw. 12, 40 bereitgestellt. Es handelt sich um einen rein instabilen Resonator ohne stabile Richtung. Dadurch sind die Probleme, die im Zusammenhang mit stabilen Resonatoren entstehen, vermieden. Insbesondere ist die Ausbildung eines hohen Multimode mit zeitlich variierender Intensitätsverteilung vermieden. Bei Zylinderspiegeln treten hohe Resonatorverluste auf, wenn der Spiegel in der ebenen (stabilen) Richtung schmal ist. Weiterhin sind Zylinderspiegel in stabiler Richtung sehr justierempfindlich (da ebene Spiegelflächen gegenüberstehen). Bei der erfindungsgemäßen Lösung mit sphärischen Spiegeln 12, 14 bzw. 12, 40 sind die für den Resonatorbetrieb erforderlichen Toleranzen leichter zu erzielen. Damit läßt sich der Resonator leichter aufbauen. Darüber hinaus sind sphärische Spiegel kostengünstiger und einfacher zu beziehen als Zylinderspiegel.

Insbesondere ist die Justierung der Spiegel 12, 14 bzw. 12, 40 einfacher als beispielsweise bei Zylinderspiegeln und der erfindungsgemäße Resonator ist unempfindlicher gegenüber Spiegelradienabweichungen und Verkippungen im Vergleichsfall von zylindrischen Spiegeln.

Es ist auch möglich, durch Verwendung eines Scrapers eine Anpassung von beispielsweise runden oder rechteckigen Querschnitten für das optisch aktive Medium durchzuführen. (Zylinderspiegel sind nur optimal für rechteckigen Mediumquerschnitt.) Bei der erfindungsgemäßen Lösung mit sphärischen Spiegeln 12, 14, 12, 40 gibt es keine Einschränkungen bezüglich der Breite wie bei Zylinderspiegeln. (Eine zu kleine Breite in der stabilen Richtung verursacht bei Zylinderspiegeln einen hohen Resonatorverlust, während eine zu große Breite zu einer zeitlich veränderlichen Mode führen kann.)

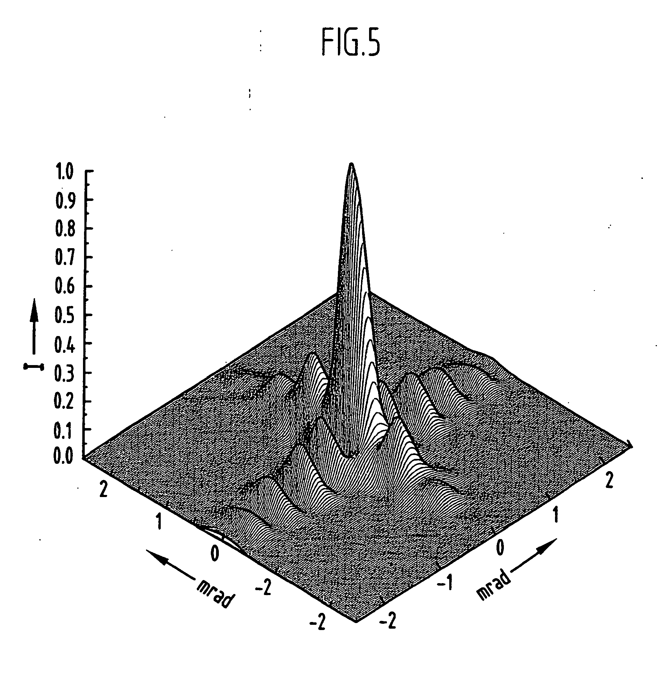

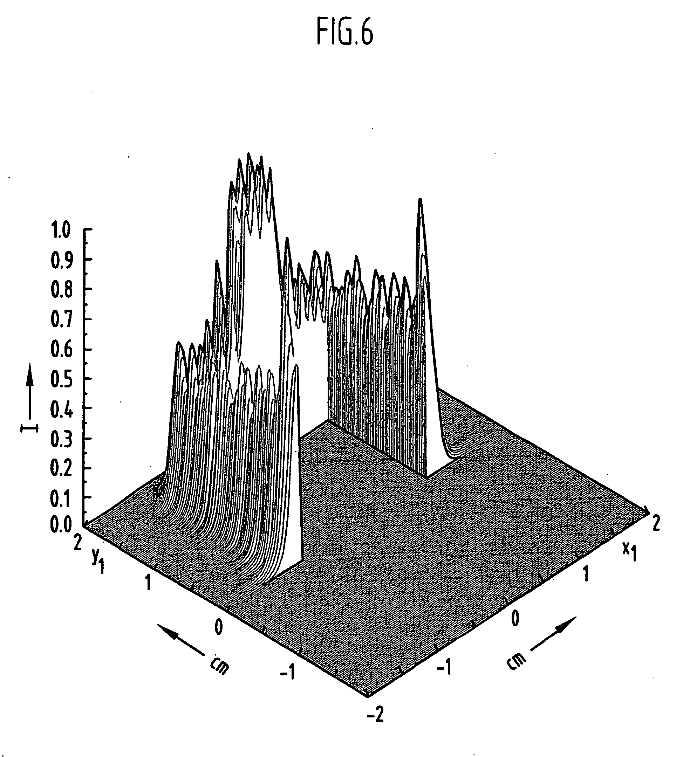

In Figur 5 und 6 sind Feldbilder für die Resonatoren 10 bzw. 38 gezeigt. In Figur 5 ist die berechnete Intensitätsverteilung im Fernfeld bezüglich Winkeln gegenüber der x₁-Achse und y₁-Achse gezeigt. (Bei Auftragung über diesen Divergenzwinkeln ist eine Unabhängigkeit bezüglich dem Abstand von dem Auskopplungsspiegel erreicht.) Man erkennt, daß die Intensität im Fernfeld kompakt verteilt ist.

In Figur 6 ist die berechnete Intensitätsverteilung im Nahfeld in der x₁-y₁-Ebene gezeigt. Die optische Achse geht durch den Punkt 0-0. Man erkennt die Beeinflussung des Nahfelds durch entsprechende Formung des Auskopplungsbereichs 26 bzw. 64.

Die erfindungsgemäßen Resonatoren lassen sich vorteilhaft verwenden im Zusammenhang mit optisch aktiven Medien, die eine kleine Verstärkung aufweisen und einen großen Querschnitt benötigen. Es lassen sich dadurch eine zeitunabhängige Mode und im Fernfeld eine nicht zu stark strukturierte Intensitätsverteilung erreichen. Insbesondere läßt sich die erfindungsgemäße Lösung im Zusammenhang mit Gaslaservorrichtungen einsetzen.

In Figur 7 ist schematisch ein erstes Ausführungsbeispiel einer Gaslaservorrichtung 66 gezeigt. Diese umfaßt einen erfindungsgemäßen Resonator 68, welcher grundsätzlich so ausgebildet ist wie oben anhand des ersten Ausführungsbeispiels 10 bzw. des zweiten Ausführungsbeispiels 38 beschrieben.

In dem Resonator 68 ist ein Behältnis 70 für das optisch aktive Gasmedium angeordnet. Durch dieses Behältnis 70 wird in einer Strömungsführung 72 ein Gas geführt. Dazu ist eine Pumpe 74 vorgesehen. In der Strömungsführung 72 ist ein Gasreservoir 75 angeordnet. Die Richtung der Strömungsführung 72 ist durch den Pfeil mit dem Bezugszeichen 76 angedeutet. Durch einen longitudinalen Gasfluß in dem Behältnis 70 kann die Ausgangsleistung der Laservorrichtung 66 erhöht werden. Die Anregung des Gases erfolgt über eine angelegte Hochspannung (in Figur 7 durch das Bezugszeichen 78 angedeutet).

Bei einem zweiten Ausführungsbeispiel einer Gaslaservorrichtung, welche in Figur 8 schematisch gezeigt und dort als Ganzes mit 80 bezeichnet ist, ist wiederum ein erfindungsgemäßer Resonator 82 vorgesehen. In diesem ist ein Strömungsraum 84 für durchströmendes Gas angeordnet. Zur Anregung des Gases wird eine Hochspannung (in Figur 8 durch das Bezugszeichen 86 angedeutet) angelegt. Das Gas durchströmt den Strömungsraum 84 transversal zur Strahlungsrichtung (das heißt quer zur optischen Achse 20). In dem gezeigten Beispiel erfolgt die Entladung transversal zum Laserstrahl und der Gasfluß erfolgt ebenfalls transversal zum Laserstrahl. Es lassen sich dabei sehr hohe Ausgangsleistungen erzielen.

## Patentansprüche

1. Optisch rein instabiler Resonator, umfassend ein optisch aktives Medium (16; 44), einen sphärischen Rückspiegel (12) und einen sphärischen Auskopplungsspiegel (14; 40), wobei eine konkave Spiegelfläche (22; 42) des Auskopplungsspiegels (14; 40) dem optisch aktiven Medium (16; 44) zugewandt ist und ein Auskopplungsbereich (26; 64) bezogen auf die optische Achse (20) asymmetrisch ausgebildet ist, so daß bezogen auf die optische Achse (20) eine asymmetrische Auskopplung erfolgt, und dem Auskopplungsspiegel (14; 40) ein erster Spiegelbereich (28; 60) zugeordnet ist, welcher auf einer Seite (32; 54) einer die optische Achse (20) umfassenden Ebene (34; 52) liegt, und ein zweiter Spiegelbereich (30; 62) zugeordnet ist, welcher auf der anderen Seite (36; 56) dieser Ebene (34; 52) liegt, wobei die beiden Spiegelbereiche (28, 30) unterschiedlich ausgebildet sind und der Auskopplungsbereich (26; 64) den zweiten Spiegelbereich (30; 62) umgibt, **dadurch gekennzeichnet, daß** der zweite Spiegelbereich (30; 62) kleinere laterale Abmessungen aufweist als der erste Spiegelbereich (28; 60).

2. Optisch rein instabiler Resonator nach Anspruch 1, **dadurch gekennzeichnet, daß** eine konkave Spiegelfläche (18) des Rückspiegels (12) dem optisch aktiven Medium (16; 44) zugewandt ist.

3. Optisch rein instabiler Resonator nach einem der vorangehenden Ansprüche, **dadurch gekennzeichnet, daß** die Brennpunkte (24) des Rückspiegels (12) und des Auskopplungsspiegels (14; 40) zwischen diesen beiden Spiegeln (12, 14; 12, 40) liegen.

4. Optisch rein instabiler Resonator nach einem der vorangehenden Ansprüche, **dadurch gekennzeichnet, daß** ein Kugelmittelpunkt für den Rückspiegel (12) auf der optischen Achse (20) liegt.

5. Optisch rein instabiler Resonator nach Anspruch 4, **dadurch gekennzeichnet, daß** der Brennpunkt (24) des Rückspiegels (12) auf der optischen Achse (20) zwischen dem Rückspiegel (12) und dem Auskopplungsspiegel (814; 40) liegt.

6. Optisch rein instabiler Resonator nach einem der vorangehenden Ansprüche, **dadurch gekennzeichnet, daß** ein Kugelmittelpunkt für den Auskopplungsspiegel (14; 40) auf der optischen Achse (20) liegt.

7. Optisch rein instabiler Resonator nach Anspruch 6, **dadurch gekennzeichnet, daß** der Brennpunkt (24) des Auskopplungsspiegels (14; 40) auf der optischen Achse (20) zwischen dem Rückspiegel (12) und dem Auskopplungsspiegel (14; 40) liegt.

8. Optisch rein instabiler Resonator nach einem der vorangehenden Ansprüche, **dadurch gekennzeichnet, daß** die Brennpunkte von Auskopplungsspiegel (14; 40) und Rückspiegel (12) zusammenfallen.

9. Optisch rein instabiler Resonator nach Anspruch 8, **dadurch gekennzeichnet, daß** der gemeinsame Brennpunkt (24) näher am Auskopplungsspiegel (14; 40) als am Rückspiegel (12) liegt.

10. Optisch rein instabiler Resonator nach einem der vorangehenden Ansprüche, **dadurch gekennzeichnet, daß** der Radius des Rückspiegels (12) sich vom Radius des Auskopplungsspiegels (14; 40) unterscheidet.

11. Optisch rein instabiler Resonator nach Anspruch 10, **dadurch gekennzeichnet, daß** der Radius des Rückspiegels (12) größer ist als der Radius des Auskopplungsspiegels (14; 40).

12. Optisch rein instabiler Resonator nach einem der vorangehenden Ansprüche, **dadurch gekennzeichnet, daß** die lateralen Abmessungen des Rückspiegels (12) größer sind als die entsprechenden lateralen Abmessungen des optisch aktiven Mediums (16; 44) und/oder eines Behältnisses (70; 84) für das optisch aktive Medium.

13. Optisch rein instabiler Resonator nach einem der vorangehenden Ansprüche, **dadurch gekennzeichnet, daß** die lateralen Abmessungen des Auskopplungsspiegels (14; 40) außerhalb des Auskopplungsbereiches (26; 64) größer sind als die entsprechenden lateralen Abmessungen des optisch aktiven Mediums (16; 44) und/oder eines Behältnisses (70; 84) für das optisch aktive Medium.

14. Optisch rein instabiler Resonator nach einem der vorangehenden Ansprüche, **dadurch gekennzeichnet, daß** ein effektiver Spiegelbereich des Auskopplungsspiegels (14; 40) bezogen auf die optische Achse (20) asymmetrisch ist.

15. Optisch rein instabiler Resonator nach Anspruch 13 oder 14, **dadurch gekennzeichnet, daß** dem Auskopplungsspiegel (14; 40) der Auskopplungsbereich (26; 64) zugeordnet ist.

16. Optisch rein instabiler Resonator nach Anspruch 15, **dadurch gekennzeichnet, daß** der Auskopplungsbereich (26; 64) zur optischen Achse (20) beabstandet ist.

17. Optisch rein instabiler Resonator nach Anspruch 15 oder 16, **dadurch gekennzeichnet, daß** der Auskopplungsbereich (26; 64) in seiner geometrischen Form entsprechend der auszukoppelnden Leistung ausgebildet ist.

18. Optisch rein instabiler Resonator nach einem der Ansprüche 13 bis 17, **dadurch gekennzeichnet, daß** der Auskopplungsspiegel (14) so ausgebildet ist, daß eine asymmetrische Auskopplung erfolgt.

19. Optisch rein instabiler Resonator nach einem der Ansprüche 13 bis 18, **dadurch gekennzeichnet, daß** ein Scraper (46) zwischen Rückspiegel (12) und Auskopplungsspiegel (40) angeordnet ist.

20. Optisch rein instabiler Resonator nach Anspruch 19, **dadurch gekennzeichnet, daß** der Scraper (46) so angeordnet und ausgebildet ist, daß eine asymmetrische Auskopplung erfolgt.

21. Optisch rein instabiler Resonator nach Anspruch 19 oder 20, **dadurch gekennzeichnet, daß** eine Spiegelfläche (48) des Scrapers (46) den Auskopplungsbereich (64) definiert.

22. Optisch rein instabiler Resonator nach einem der Ansprüche 19 bis 21, **dadurch gekennzeichnet, daß** eine Spiegelfläche (48) des Scrapers (46) an das optisch aktive Medium (44) und/oder ein Behältnis für das optisch aktive Medium angepaßt ausgebildet ist.

23. Optisch rein instabiler Resonator nach einem der Ansprüche 19 bis 22, **dadurch gekennzeichnet, daß** der Scraper (46) im wesentlichen in einem 45°-Winkel zur optischen Achse (20) angeordnet ist.

24. Optisch rein instabiler Resonator nach einem der vorangehenden Ansprüche, **dadurch gekennzeichnet, daß** der erste Spiegelbereich (28; 60) eine größere Spiegelfläche hat als der zweite Spiegelbereich (30; 62).

25. Optisch rein instabiler Resonator nach einem der vorangehenden Ansprüche, **dadurch gekennzeichnet, daß** der erste Spiegelbereich (28; 60) und der zweite Spiegelbereich (30; 62) in der Ebene (34; 52), welche die optische Achse (20) umfaßt, verbunden sind.

26. Optisch rein instabiler Resonator nach einem der vorangehenden Ansprüche, **dadurch gekennzeichnet, daß** der zweite Spiegelbereich (30; 62) achssymmetrisch zu einer Achse (y₁) ausgebildet ist, welche senkrecht zu der Ebene (34; 52) steht, welche die optische Achse (20) umfaßt.

27. Optisch rein instabiler Resonator nach einem der vorangehenden Ansprüche, **dadurch gekennzeichnet, daß** der erste Spiegelbereich (28; 60) bezogen auf seinen Außenumfang halbkreisförmig ist.

28. Optisch rein instabiler Resonator nach einem der vorangehenden Ansprüche, **dadurch gekennzeichnet, daß** der zweite Spiegelbereich (30; 62) bezogen auf seinen Außenumfang halbkreisförmig ist.

29. Optisch rein instabiler Resonator nach einem der vorangehenden Ansprüche, **dadurch gekennzeichnet, daß** eine Projektion des optisch aktiven Mediums parallel zur optischen Achse (20) auf den Rückspiegel (12) innerhalb eines beleuchteten Bereichs des Rückspiegels (12) liegt.

30. Verwendung des Resonators (10; 38) gemäß einem der vorangehenden Ansprüche in einem Laser.

31. Laservorrichtung, insbesondere Gaslaservorrichtung, welche einen Resonator (10; 38) gemäß einem der Ansprüche 1 bis 29 aufweist.

32. Laservorrichtung nach Anspruch 31, **dadurch gekennzeichnet, daß** zwischen dem Rückspiegel (12) und dem Auskopplungsspiegel (14; 40) ein Strömungsraum (70; 84) angeordnet ist, welches von Gas durchströmbar ist.

## Claims

1. Optically purely unstable resonator, comprising an optically active medium (16; 44), a spherical back mirror (12) and a spherical outcoupling mirror (14; 40), wherein a concave mirror surface (22; 42) of the outcoupling mirror (14; 40) faces the optically active medium (16; 44), and an outcoupling region (26; 64) is of asymmetrical configuration in relation to the optical axis (20), so that in relation to the optical axis (20) an asymmetrical outcoupling takes place, and associated with the outcoupling mirror (14; 40) are a first mirror region (28; 60) lying on one side (32; 54) of a plane (34; 52) containing the optical axis (20), and a second mirror region (30; 62) lying on the other side (36; 56) of this plane (34; 52), the two mirror regions (28, 30) differing in design, and the outcoupling region (26; 64) surrounding the second mirror region (30; 62), **characterized in that** the second mirror region (30; 62) has smaller lateral dimensions than the first mirror region (28; 60).

2. Optically purely unstable resonator in accordance with claim 1, **characterized in that** a concave mirror surface (18) of the back mirror (12) faces the optically active medium (16; 44).

3. Optically purely unstable resonator in accordance with any one of the preceding claims, **characterized in that** the focal points (24) of the back mirror (12) and the outcoupling mirror (14; 40) lie between these two mirrors (12, 14; 12, 40).

4. Optically purely unstable resonator in accordance with any one of the preceding claims, **characterized in that** a central point of a sphere for the back mirror (12) lies on the optical axis (20).

5. Optically purely unstable resonator in accordance with claim 4, **characterized in that** the focal point (24) of the back mirror (12) lies on the optical axis (20) between the back mirror (12) and the outcoupling mirror (814; 40).

6. Optically purely unstable resonator in accordance with any one of the preceding claims, **characterized in that** a central point of a sphere for the outcoupling mirror (14; 40) lies on the optical axis (20).

7. Optically purely unstable resonator in accordance with claim 6, **characterized in that** the focal point (24) of the outcoupling mirror (14; 40) lies on the optical axis (20) between the back mirror (12) and the outcoupling mirror (14; 40).

8. Optically purely unstable resonator in accordance with any one of the preceding claims, **characterized in that** the focal points of outcoupling mirror (14; 40) and back mirror (12) coincide.

9. Optically purely unstable resonator in accordance with claim 8, **characterized in that** the common focal point (24) lies closer to the outcoupling mirror (14; 40) than to the back mirror (12).

10. Optically purely unstable resonator in accordance with any one of the preceding claims, **characterized in that** the radius of the back mirror (12) differs from the radius of the outcoupling mirror (14; 40).

11. Optically purely unstable resonator in accordance with claim 10, **characterized in that** the radius of the back mirror (12) is larger than the radius of the outcoupling mirror (14; 40).

12. Optically purely unstable resonator in accordance with any one of the preceding claims, **characterized in that** the lateral dimensions of the back mirror (12) are larger than the corresponding lateral dimensions of the optically active medium (16; 44) and/or a receptacle (70; 84) for the optically active medium.

13. Optically purely unstable resonator in accordance with any one of the preceding claims, **characterized in that** the lateral dimensions of the outcoupling mirror (14; 40) outside of the outcoupling region (26; 64) are larger than the corresponding lateral dimensions of the optically active medium (16; 44) and/or a receptacle (70; 84) for the optically active medium.

14. Optically purely unstable resonator in accordance with any one of the preceding claims, **characterized in that** an effective mirror region of the outcoupling mirror (14; 40) is asymmetrical in relation to the optical axis (20).

15. Optically purely unstable resonator in accordance with claim 13 or 14, **characterized in that** the outcoupling region (26; 64) is associated with the outcoupling mirror (14; 40).

16. Optically purely unstable resonator in accordance with claim 15, **characterized in that** the outcoupling region (26; 64) is spaced from the optical axis (20).

17. Optically purely unstable resonator in accordance with claim 15 or 16, **characterized in that** the outcoupling region (26; 64) is configured in its geometrical shape in accordance with the power to be coupled out.

18. Optically purely unstable resonator in accordance with any one of claims 13 to 17, **characterized in that** the outcoupling mirror (14) is designed such that an asymmetrical outcoupling takes place.

19. Optically purely unstable resonator in accordance with any one of claims 13 to 18, **characterized in that** a scraper (46) is arranged between back mirror (12) and outcoupling mirror (40).

20. Optically purely unstable resonator in accordance with claim 19, **characterized in that** the scraper (46) is arranged and designed such that an asymmetrical outcoupling takes place.

21. Optically purely unstable resonator in accordance with claim 19 or 20, **characterized in that** a mirror surface (48) of the scraper (46) defines the outcoupling region (64).

22. Optically purely unstable resonator in accordance with any one of claims 19 to 21, **characterized in that** a mirror surface (48) of the scraper (46) is adapted in design to the optically active medium (44) and/or a receptacle for the optically active medium.

23. Optically purely unstable resonator in accordance with any one of claims 19 to 22, **characterized in that** the scraper (46) is arranged substantially at a 45° angle to the optical axis (20).

24. Optically purely unstable resonator in accordance with any one of the preceding claims, **characterized in that** the first mirror region (28; 60) has a larger mirror surface than the second mirror region (30; 62).

25. Optically purely unstable resonator in accordance with any one of the preceding claims, **characterized in that** the first mirror region (28; 60) and the second mirror region (30; 62) are joined in the plane (34; 52) containing the optical axis (20).

26. Optically purely unstable resonator in accordance with any one of the preceding claims, **characterized in that** the second mirror region (30; 62) is of axially symmetrical design in relation to an axis (y₁) extending perpendicularly to the plane (34; 52) containing the optical axis (20).

27. Optically purely unstable resonator in accordance with any one of the preceding claims, **characterized in that** the first mirror region (28; 60) is semicircular with respect to its outer circumference.

28. Optically purely unstable resonator in accordance with any one of the preceding claims, **characterized in that** the second mirror region (30; 62) is semicircular with respect to its outer circumference.

29. Optically purely unstable resonator in accordance with any one of the preceding claims, **characterized in that** a projection of the optically active medium parallel to the optical axis (20) onto the back mirror (12) lies within an illuminated region of the back mirror (12).

30. Use of the resonator (10; 38) in accordance with any one of the preceding claims in a laser.

31. Laser device, in particular gas laser device, which comprises a resonator (10; 38) in accordance with any one of claims 1 to 29.

32. Laser device in accordance with claim 31, **characterized in that** a flow space (70; 84) for gas to flow therethrough is arranged between the back mirror (12) and the outcoupling mirror (14; 40).

## Revendications

1. Résonateur instable de façon optiquement pure, comprenant un milieu optiquement actif (16 ; 44), un miroir réflecteur sphérique (12) et un miroir de sortie sphérique (14 ; 40), dans lequel une surface réfléchissante concave (22 ; 42) du miroir de sortie (14 ; 40) est tournée vers le milieu optiquement actif (16 ; 44), et une zone de déclenchement (26 ; 64) est réalisée de façon asymétrique par rapport à l'axe optique (20), de sorte que par rapport à l'axe optique (20) un déclenchement asymétrique a lieu, et au miroir de sortie (14 ; 40) est attribuée une première zone réfléchissante (28 ; 60) qui se trouve sur un côté (32 ; 54) d'un plan (34 ; 52) comprenant l'axe optique (20) et une deuxième zone réfléchissante (30 ; 62) qui se trouve de l'autre côté (36 ; 56) de ce plan (34 ; 52), dans lequel les deux zones réfléchissantes (28, 30) sont réalisées différemment et la zone de déclenchement (26 ; 64) entoure la deuxième zone réfléchissante (30 ; 62), **caractérisé en ce que** la deuxième zone réfléchissante (30 ; 62) présente des dimensions latérales inférieures à celles de la première zone réfléchissante (28 ; 60).

2. Résonateur instable de façon optiquement pure selon la revendication 1, **caractérisé en ce qu'**une surface réfléchissante concave (18) du miroir réflecteur (12) est tournée vers le milieu optiquement actif (16 ; 44).

3. Résonateur instable de façon optiquement pure selon l'une quelconque des revendications précédentes, **caractérisé en ce que** les foyers (24) du miroir réflecteur (12) et du miroir de sortie (14 ; 40) se trouvent entre ces deux miroirs (12, 14 ; 12, 40).

4. Résonateur instable de façon optiquement pure selon l'une quelconque des revendications précédentes, **caractérisé en ce qu'**un centre de sphère pour le miroir réflecteur (12) sur trouve sur l'axe optique (20).

5. Résonateur instable de façon optiquement pure selon la revendication 4, **caractérisé en ce que** le foyer (24) du miroir réflecteur (12) se trouve sur l'axe optique (20) entre le miroir réflecteur (12) et le miroir de sortie (814 ; 40).

6. Résonateur instable de façon optiquement pure selon l'une quelconque des revendications précédentes, **caractérisé en ce qu'**un centre de sphère pour le miroir de sortie (14 ; 40) se trouve sur l'axe optique (20).

7. Résonateur instable de façon optiquement pure selon la revendication 6, **caractérisé en ce que** le foyer (24) du miroir de sortie (14 ; 40) se trouve sur l'axe optique (20) entre le miroir réflecteur (12) et le miroir de sortie (14 ; 40).

8. Résonateur instable de façon optiquement pure selon l'une quelconque des revendications précédentes, **caractérisé en ce que** les foyers du miroir de sortie (14 ; 40) et du miroir réflecteur (12) coïncident.

9. Résonateur instable de façon optiquement pure selon la revendication 8, **caractérisé en ce que** le foyer commun (24) est plus proche du miroir de sortie (14 ; 40) que du miroir réflecteur (12).

10. Résonateur instable de façon optiquement pure selon l'une quelconque des revendications précédentes, **caractérisé en ce que** le rayon du miroir réflecteur (12) est différent du rayon du miroir de sortie (14 ; 40).

11. Résonateur instable de façon optiquement pure selon la revendication 10, **caractérisé en ce que** le rayon du miroir réflecteur (12) est supérieur au rayon du miroir de sortie (14 ; 40).

12. Résonateur instable de façon optiquement pure selon l'une quelconque des revendications précédentes, **caractérisé en ce que** les dimensions latérales du miroir réflecteur (12) sont plus grandes que les dimensions latérales correspondantes du milieu optiquement actif (16 ; 44) et/ou d'un récipient (70 ; 84) pour le milieu optiquement actif.

13. Résonateur instable de façon optiquement pure selon l'une quelconque des revendications précédentes, **caractérisé en ce que** les dimensions latérales du miroir de sortie (14 ; 40) à l'extérieur de la zone de déclenchement (26 ; 64) sont plus grandes que les dimensions latérales correspondantes du milieu optiquement actif (16 ; 44) et/ou d'un récipient (70 ; 84) pour le milieu optiquement actif.

14. Résonateur instable de façon optiquement pure selon l'une quelconque des revendications précédentes, **caractérisé en ce qu'**une zone réfléchissante effective du miroir de sortie (14 ; 40) est asymétrique par rapport à l'axe optique (20).

15. Résonateur instable de façon optiquement pure selon la revendication 13 ou 14, **caractérisé en ce que** la zone de déclenchement (26 ; 64) est attribuée au miroir de sortie (14 ; 40).

16. Résonateur instable de façon optiquement pure selon la revendication 15, **caractérisé en ce que** la zone de déclenchement (26 ; 64) est espacée par rapport à l'axe optique (20).

17. Résonateur instable de façon optiquement pure selon la revendication 15 ou 16, **caractérisé en ce que** la zone de déclenchement (26 ; 64) est réalisée au niveau de sa forme géométrique selon la puissance à déclencher.

18. Résonateur instable de façon optiquement pure selon l'une quelconque des revendications 13 à 17, **caractérisé en ce que** le miroir de sortie (14) est réalisé de telle sorte qu'un déclenchement asymétrique a lieu.

19. Résonateur instable de façon optiquement pure selon l'une quelconque des revendications 13 à 18, **caractérisé en ce qu'**une plaque inclinée (46) est disposée entre le miroir réflecteur (12) et le miroir de sortie (40).

20. Résonateur instable de façon optiquement pure selon la revendication 19, **caractérisé en ce que** la plaque inclinée (46) est disposée et réalisée de telle sorte qu'un déclenchement asymétrique a lieu.

21. Résonateur instable de façon optiquement pure selon la revendication 19 ou 20, **caractérisé en ce qu'**une surface réfléchissante (48) de la plaque inclinée (46) définit la zone de déclenchement (64).

22. Résonateur instable de façon optiquement pure selon l'une quelconque des revendications 19 à 21, **caractérisé en ce qu'**une surface réfléchissante (48) de la plaque inclinée (46) est réalisée en étant adaptée au milieu optiquement actif (44) et/ou à un récipient pour le milieu optiquement actif.

23. Résonateur instable de façon optiquement pure selon l'une quelconque des revendications 19 à 22, **caractérisé en ce que** la plaque inclinée (46) est disposée substantiellement sous un angle de 45° par rapport à l'axe optique (20).

24. Résonateur instable de façon optiquement pure selon l'une quelconque des revendications précédentes, **caractérisé en ce que** la première zone réfléchissante (28 ; 60) présente une plus grande surface réfléchissante que la deuxième zone réfléchissante (30 ; 62).

25. Résonateur instable de façon optiquement pure selon l'une quelconque des revendications précédentes, **caractérisé en ce que** la première zone réfléchissante (28 ; 60) et la deuxième zone réfléchissante (30 ; 62) sont reliées dans le plan (34 ; 52) qui comprend l'axe optique (20).

26. Résonateur instable de façon optiquement pure selon l'une quelconque des revendications précédentes, **caractérisé en ce que** la deuxième zone réfléchissante (30 ; 62) est réalisée à symétrie axiale par rapport à un axe (y₁) qui se trouve perpendiculairement au plan (34 ; 52) qui comprend l'axe optique (20).

27. Résonateur instable de façon optiquement pure selon l'une quelconque des revendications précédentes, **caractérisé en ce que** la première zone réfléchissante (28 ; 60) est semi-circulaire par rapport à sa périphérie extérieure.

28. Résonateur instable de façon optiquement pure selon l'une quelconque des revendications précédentes, **caractérisé en ce que** la deuxième zone réfléchissante (30 ; 62) est semi-circulaire par rapport à sa périphérie extérieure.

29. Résonateur instable de façon optiquement pure selon l'une quelconque des revendications précédentes, **caractérisé en ce qu'**une projection du milieu optiquement actif en parallèle à l'axe optique (20) sur le miroir réflecteur (12) se trouve à l'intérieur d'une zone éclairée du miroir réflecteur (12).

30. Utilisation du résonateur (10 ; 38) selon l'une quelconque des revendications précédentes dans un laser.

31. Dispositif laser, en particulier dispositif laser à gaz, présentant un résonateur (10 ; 38) selon l'une quelconque des revendications 1 à 29.

32. Dispositif laser selon la revendication 31, **caractérisé en ce qu'**entre le miroir réflecteur (12) et le miroir de sortie (14 ; 40), un espace d'écoulement (70 ; 84) est disposé par lequel un gaz peut s'écouler.
